# EUROPEAN PATENT APPLICATION

(11) **EP 1 210 989 A2**
(43) Date of publication of application: **05.06.2002**
(21) Application number: 01126534.5
(22) Date of filing: 14.11.2001
(51) Int. Cl.: B09B 3/00, B65F 1/14, B30B 9/30

(54) **Device for processing wet waste**

(30) Priority: 30.11.2000 IT TV000148
(71) Applicant: Cesca, Domenico, 31051 Follina (Treviso) (IT)
(72) Inventor: Cesca, Domenico, 31051 Follina (Treviso) (IT)
(74) Representative: Modiano, Guido, Dr.-Ing.

(57) **Abstract**

A device for treating wet waste, comprising a container (3) provided with a first chamber (6) for the storage and pressing of the wet waste (2), the first chamber (6) being connected to means for recovering liquids and to a second drying chamber (16), which is in turn connected to a third chamber (19) for reducing the fragment size of the previously treated waste (20).

## Description

The present invention relates to a device for processing wet waste, such as for example residues of vegetables, fruit and food waste in general.

Disposal of these kinds of waste is currently performed usually by storing them in appropriately provided throwaway bags or sacs that are deposited in appropriately provided bins.

However, this waste usually has a significant volume and weight, which force the citizen to replace bin bags rather frequently and to carry said bags, not without effort, to the ordinary curbside bins, which in most cases are not adjacent to his home because they have to serve many users.

Secondly, the wet waste can produce unpleasant odors, especially when, for example, they are constituted by residues of vegetables and eggs, and this forces the user to close the trash bag and dispose of it even though it is not entirely full.

The aim of the present invention is to solve the problems of the prior art, by providing a method and a corresponding device that allow even an individual user to treat the disposal of wet waste even in his own home alternatively to an industrial treatment.

Within this aim, an object of the invention is to provide a method and a device that allow the treatment of wet waste in a very quick and easy manner and even by people that have no particular training.

Another important object is to provide a method and a device for treating wet waste, even at the industrial level, that is structurally simple and has a space occupation that allows its domestic use.

Another important object is to provide a method and a device for treating wet waste that also allow optional reuse of the treated waste for its further disposal in a quick and easy manner.

Another object is to provide a method and a device for treating wet waste that are reliable and safe in use, the device having low manufacturing costs.

This aim and these and other objects that will become better apparent hereinafter are achieved by a method for treating wet waste comprising the steps of:
collecting said wet waste at a first chamber for storage;
pressing said wet waste with extraction of part of the moisture contained therein;
conveying said waste into a second chamber for drying;
conveying said waste into a third chamber for reducing the fragment size of said waste and for subsequently storing said waste in containers.

This aim and these and other objects are also achieved by a device for treating wet waste, characterized in that it comprises a container provided with a first chamber for storage and pressing of said wet waste, which is connected to means for recovering liquids and to a second chamber for drying, which is in turn connected to a third chamber for reducing the fragment size of said waste.

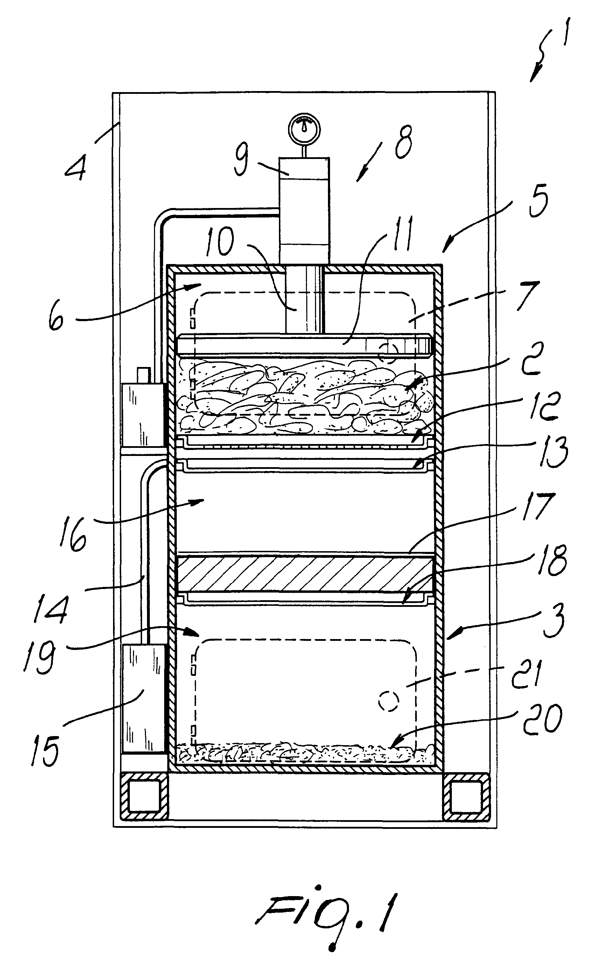

Further characteristics and advantages of the invention will become better apparent from the description of a particular but not exclusive embodiment thereof, illustrated only by way of non-limitative example in the accompanying drawings, wherein Figure 1 is a partially sectional schematic view of the device for treating wet waste.

With reference to the figure, the reference numeral 1 designates a device for treating wet waste, the waste being generally designated by the reference numeral 2.

The device comprises a container 3, which can be optionally concealed within an appropriately provided box-like compartment 4 that can be located for example in the user's home, preferably directly in the kitchen.

Preferably, the container 3 has a vertically elongated shape in which there is, proximate to an upper end thereof 5, a first chamber 6 inside which it is possible to store, through a first opening 7, the wet waste constituted for example by residues of vegetables, fruit or food waste in general.

In the first chamber 6 there are means for pressing the wet waste 2, which are constituted for example by a suitable piston 8 whose body 9 is arranged outside the upper end 5 of the container 3 and whose stem 10 ends with a plate 11 that is shaped complementarily to the first chamber 6 and is suitable to compress the wet waste 2 at a first surface 12 that constitutes the bottom of the first chamber 6.

Advantageously, the first surface 12 is perforated so as to allow the recovery of the liquids obtained from pressing, for example at an underlying second surface 13 that is in turn connected, through an appropriate duct 14, to a reservoir 15 for storing such liquids.

Alternatively, the first and second surfaces can be constituted by a single element.

Furthermore, the first and second surfaces are of the sliding type, so that once the wet waste has been pressed and its moisture has therefore been partially removed, the wet waste can be conveyed at an underlying second chamber 16.

At this point, therefore, the wet waste 2 has a compact shape, designated by the reference numeral 17, and most of all has lost part of its moisture.

The second chamber 16 is internally provided with means suitable to dry the wet waste in their compact shape 17, which are constituted by suitable resistors and/or heating lamps and/or other known devices suitable to dry products.

The bottom of the second chamber 16 is constituted by a third surface 18, which is also of the sliding or removable type, so that once the waste has been dried it can be conveyed into an underlying third chamber 19.

The third chamber contains means suitable to reduce the fragment size of the previously pressed and dried wet waste, which are constituted for example by a crusher or by crushing means that are suitable to reduce the previously treated wet waste until it has a chosen fragment size, thus returning the treated waste in a granular form, designated by the reference numeral 20, that has a smaller volume.

The waste thus treated can be removed through a suitable second opening 21 formed in the container 3 and then used for example as a fertilizer for plants, since it is odorless and also easy to store, by virtue of its reduced volumes and weights, in bags for subsequent reuse or final disposal.

It has thus been observed that the invention has achieved the intended aim and objects, a method and a device having been obtained that allow even the individual user to treat wet waste disposal even in his own home in a manner that is very quick and easy even for people that have no particular training.

Furthermore, the wet waste treatment device is structurally simple and compact, so as to allow its industrial or domestic use and also allow optional reuse of the treated waste or its further disposal in a quick and easy manner.

The invention is of course susceptible of numerous modifications and variations, all of which are within the scope of the same inventive concept.

The materials and the dimensions that constitute the individual components of the invention may of course be the most pertinent according to specific requirements.

The disclosures in Italian Patent Application No. TV2000A000148 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for treating wet waste, **characterized in that** it comprises the steps of:
collecting said wet waste (2) at a first chamber (6) for storage;
pressing said wet waste (2) with extraction of part of the moisture contained therein;
conveying said waste (2) into a second chamber (16) for drying;
conveying said waste (2) into a third chamber (19) for reducing the fragment size of said waste (2) and for subsequently storing said waste in appropriately provided containers.

2. A device for treating wet waste, **characterized in that** it comprises a container provided with a first chamber (6) for the storage and pressing of said wet waste (2), which is connected to means for recovering liquids and to a second drying chamber (16), which is in turn connected to a third chamber (19) for reducing the fragment size of said waste (2).

3. The device according to claim 2, **characterized in that** it is constituted by a container (3) that can be concealed within a box-like compartment (4) that can be arranged in the user's home and is vertically elongated.

4. The device according to claim 3, **characterized in that** proximate to the upper end (5) of said container (3) said first chamber (6) is provided inside which the wet waste (2) can be stored through a first opening (7).

5. The device according to one or more of the preceding claims, **characterized in that** means for pressing said wet waste (2) are present in said first chamber (6).

6. The device according to claim 5, **characterized in that** said means are constituted by a piston (8) whose body (9) is arranged externally with respect to the upper end (5) of said container (3) and whose stem (10) ends with a plate (11) that is shaped complementarily to said first chamber (6) and is suitable to compress said wet waste (2) at a first surface (12) that constitutes the bottom of said first chamber (6).

7. The device according to claim 6, **characterized in that** said first surface (12) is perforated so as to allow to recover the liquids obtained from pressing at an underlying second surface (13), which is in turn connected, through a duct (14), to a reservoir (15) for storing said liquids.

8. The device according to claim 7, **characterized in that** said first (12) and second (13) surfaces are constituted by a single element.

9. The device according to claim 7, **characterized in that** said first (12) and second (13) surfaces are of the sliding type so that once said wet waste (2) has been pressed and its moisture has therefore been partially removed, said waste can be transferred at the underlying second chamber (16).

10. The device according to claim 2, **characterized in that** said second chamber (16) is internally provided with means (17) suitable to dry said pressed wet waste (2).

11. The device according to claim 10, **characterized in that** said means (17) are constituted by resistors and/or heating lamps and/or other known devices suitable to dry products.

12. The device according to one or more of the preceding claims, **characterized in that** the bottom of said second chamber (16) is constituted by a third surface (18) which is also of the sliding or removable type so that once the waste (2) has been dried it can be conveyed into the underlying third chamber (19).

13. The device according to claim 12, **characterized in that** said third chamber (19) contains means suitable to reduce the fragment size of the previously pressed and dried wet waste (2).

14. The device according to claim 13, **characterized in that** said means are constituted by a crusher or by crushing means suitable to reduce the previously treated wet waste until it has a chosen fragment size, thus returning the treated waste (20) in the form of a granulate.

15. The device according to claim 14, **characterized in that** said container (3) has a second opening (21) for removing said treated waste (20).
